# EUROPÄISCHE PATENTANMELDUNG

(11) **EP 2 789 453 A1**
(43) Veröffentlichungstag der Anmeldung: **15.10.2014**
(21) Anmeldenummer: 14157588.6
(22) Anmeldetag: 04.03.2014
(51) Int. Cl.: B29C 70/50, B29C 33/30, B29K 101/12

(54) **Verfahren zum Verformen eines bahnförmigen Endlosmaterials und Vorrichtung zur Durchführung des Verfahrens**

(30) Priorität: 11.04.2013 DE 102013103617
(71) Anmelder: REHAU AG + Co, 95111 Rehau (DE)
(72) Erfinder: Zapf, Armin, 91413 Neustadt/Aisch (DE)

(57) **Zusammenfassung**

Die Erfindung betrifft ein Verfahren zum Verformen eines bahnförmigen Endlosmaterials (12), wobei das Endlosmaterial (12) aus wenigstens einer mit Verstärkungsfasern (14) verstärkten Lage (16) besteht, die ein die Verstärkungsfasern (14) zumindest teilweise umgebendes thermoplastisches Kunststoffmaterial (18) umfasst, mit den Schritten:
(A) Bereitstellen wenigstens eines durchgängigen Verformungsschlitzes (21, 22) zum Ausbilden wenigstens einer vorgegebenen dreidimensionalen Verformung an dem bahnförmigen Endlosmaterial (12),
(B) wenigstens bereichsweises Erwärmen des Endlosmaterials (12) bis an oder über die Schmelztemperatur des thermoplastischen Kunststoffmaterials (18), und
(C) Bewegen des erwärmten Endlosmaterials (12) in einer vorgegebenen Laufrichtung, wobei das Endlosmaterial (12) beim Bewegen in der Laufrichtung durch den durchgängigen Verformungsschlitz (21, 22) hindurch bewegt wird, und wobei bei dem hindurch bewegen durch den Verformungsschlitz (21, 22) dem Endlosmaterial (12) die vorgegebene dreidimensionale Verformung aufgeprägt wird.

Die Erfindung betrifft ferner eine Vorrichtung zur Durchführung des Verfahrens.

## Beschreibung

### Hintergrund der Erfindung

Die vorliegende Erfindung betrifft ein Verfahren zum Verformen eines bahnförmigen Endlosmaterials und eine Vorrichtung zur Durchführung des Verfahrens.

Es ist bekannt, faserverstärkte Matten bzw. flächige faserverstärkte Materialstücke mit einer die Fasern umgebenden thermoplastischen Matrix zur Herstellung von Formteilen, wie z.B. einem Gehäuse für eine Traktionsbatterie eines Elektrofahrzeugs, zu verwenden, wobei die Matten hierzu geeignet verformt, zum Ausbilden eines Vorformlings aneinander gelegt und der Vorformling innerhalb eines Formwerkzeugs zur endgültigen Ausbildung des Formteils erwärmt bzw. erhitzt und unter Druck gesetzt wird.

Die zur Ausbildung des jeweiligen Formteils verwendeten Materialstücke werden hierbei meist sehr aufwendig in eine dreidimensionale Form gebracht bevor sie in vorgegebener Weise zum Ausbilden des Vorformlings aneinander gelegt werden. Geringfügig zu krümmende Materialstücke werden dabei teilweise gar nicht vorgebogen, einhergehend mit einem erhöhtem Legeaufwand bzw. Fixierungsaufwand. Bei stark zu krümmenden Materialstücken werden teilweise Biegungen durch serielles Aufheizen an verschiedenen Linien und Biegen bzw. Abkanten entlang dieser Linien realisiert, wobei das Biegen bzw. Abkanten nur teilweise zeitgleich erfolgen kann. Sehr komplexe Geometrien einzelner Materialstücke werden teilweise in einem nicht kontinuierlichen Verfahren sehr aufwendig durch eine Umformung an eigens hierfür eingerichteten Vorform-Einrichtungen realisiert.

Das beschriebene Biegen bzw. Abkanten führt insgesamt zu langen Prozesszeiten und erheblichem Handlingsaufwand. Zwar ermöglicht die Biegung um Kanten bzw. Linien die Realisierung verschiedener Biegewinkel. Allerdings ist die Komplexität der Biegeteile bzw. Geometrien eingeschränkt. Die Umformung bzw. Vorformung an eigens eingerichteten Vorform-Einrichtungen ermöglicht zwar deutlich komplexere Geometrien, die hierfür bereitzustellenden Zykluszeiten bzw. Prozesszeiten sind jedoch oft sehr hoch, was insbesondere bei der Herstellung einer Vielzahl von Formteilen im Rahmen einer Serienfertigung problematisch sein kann.

### Zugrundeliegende Aufgabe

Es ist Aufgabe der Erfindung, ein Verfahren anzugeben, mit welchem ein mit Verstärkungsfasern verstärktes bahnförmiges Endlosmaterial bereitgestellt werden kann, aus welchem dreidimensionale Formteile gegenüber den bekannten Lösungen mit wesentlich geringerem Aufwand gefertigt werden können, und eine Vorrichtung zur Durchführung des Verfahrens anzugeben.

Diese Aufgabe wird erfindungsgemäß mit einem Verfahren mit den Merkmalen des Anspruchs 1 und mit einer Vorrichtung mit den Merkmalen des Anspruchs 10 gelöst.

Das erfindungsgemäße Verfahren zum Herstellen des bahnförmigen Endlosmaterials umfasst die folgenden Schritte:
(A) Bereitstellen wenigstens eines durchgängigen Verformungsschlitzes zum Ausbilden wenigstens einer vorgegebenen dreidimensionalen Verformung an dem bahnförmigen Endlosmaterial, wobei der Verformungsschlitz der vorgegebenen Verformung entsprechend ausgebildet ist,
(B) wenigstens bereichsweises Erwärmen des Endlosmaterials bis an oder über die Schmelztemperatur des thermoplastischen Kunststoffmaterials, und
(C) Bewegen des erwärmten Endlosmaterials in einer vorgegebenen Laufrichtung, wobei das Endlosmaterial beim Bewegen in der Laufrichtung durch den durchgängigen Verformungsschlitz hindurch bewegt wird, und wobei bei dem hindurch bewegen durch den Verformungsschlitz dem Endlosmaterial die vorgegebene dreidimensionale Verformung aufgeprägt wird.

Durch das Aufprägen der wenigstens einen vorgegebenen dreidimensionalen Verformung kann vorteilhaft ein mit Verstärkungsfasern, insbesondere Lang- oder Endlosfasern, verstärktes Endlosmaterial bereitgestellt werden, welches bereits eine an das jeweilige Formteil angepasste bzw. für dieses vorgesehene Vorformung bzw. Verformung aufweist. Von dem Endlosmaterial abgetrennte Materialstücke können dann zur Herstellung von einem oder mehreren Formteilen verwendet werden, wobei die Materialstücke hierzu geeignet verformt, zum Ausbilden eines Vorformlings aneinander gelegt und der Vorformling zur endgültigen Ausbildung des Formteils erwärmt bzw. erhitzt und innerhalb eines Formwerkzeugs unter Druck gesetzt werden können. Da das Endlosmaterial bereits eine an das jeweilige Formteil angepasste bzw. für dieses vorgesehene Vorformung bzw. Verformung aufweist, kann der Verformungsaufwand und auch der Handhabungsaufwand insbesondere zum Ausbilden des Vorformlings deutlich reduziert werden. Auf diese Weise kann bei einer Serienfertigung einer Vielzahl baugleicher Formteile insbesondere die Prozesszeit deutlich verkürzt werden.

Durch die Benennung der Schritte mit den Buchstaben A bis C wird keine Bindung bzw. keine ausschließliche Bindung an eine zeitliche Reihenfolge verfolgt. Die Buchstaben dienen lediglich der Bennennung bzw. Kennzeichnung der Schritte. Die Schritte A und B werden hier vorzugsweise aufeinanderfolgend durchgeführt, also Schritt B nach Schritt A. Schritt B wird vor Schritt C vorgenommen.

Das Endlosmaterial besteht aus wenigstens einer mit Verstärkungsfasern, insbesondere Lang- oder Endlosfasern, verstärkten Lage, die ein die Verstärkungsfasern zumindest teilweise oder zur Gänze umgebendes thermoplastisches Kunststoffmaterial umfasst.

Die Verstärkungsfasern, insbesondere Lang- oder Endlosfasern, können vorzugsweise in Form von Mineralfasern oder Glasfasern oder Carbonfasern oder Aramidfasern oder polymeren Fasern oder synthetischen Fasern ausgebildet sein. Insbesondere kann es sich bei den Verstärkungsfasern, insbesondere Lang- oder Endlosfasern, um Verstärkungsfasern von nachwachsenden Rohstoffen handeln. Die wenigstens eine Lage des Endlosmaterials kann durch die Verstärkungsfasern, insbesondere Lang- oder Endlosfasern, besonders bevorzugt unidirektional faserverstärkt sein, wobei die Faserrichtung der Verstärkungsfasern bzw. die Längserstreckung der Verstärkungsfasern bevorzugt parallel bzw. im wesentlichen parallel zur Längsrichtung des bahnförmigen Endlosmaterials orientiert ist. Alternativ können die Verstärkungsfasern, insbesondere Lang- oder Endlosfasern, auch in einer winkligen Orientierung oder regellos zueinander angeordnet sein.

In Schritt B wird das Endlosmaterial wenigstens bereichsweise bis an oder über die Schmelztemperatur des thermoplastischen Kunststoffmaterials erwärmt. Durch diese vorgesehene Erwärmung wird das thermoplastische Kunststoffmaterial in einen plastisch verformbaren Zustand überführt bzw. wenigstens bereichsweise in einen plastisch verformbaren Zustand überführt. In diesem plastisch verformbaren Zustand kann in Schritt C dem Endlosmaterial die vorgegebene dreidimensionale Verformung durch hindurch bewegen durch den Verformungsschlitz aufgeprägt werden, und zwar derart, das beim hindurch bewegen durch den Verformungsschlitz das thermoplastischen Kunststoffmaterial entsprechend plastisch verformt wird. Auch eine Erwärmung bis über die Schmelztemperatur ist möglich, da die Verstärkungsfasern, insbesondere Lang- oder Endlosfasern, als Verbundmittel auch bei dieser Temperatur einem übermäßigen Zerfließen des thermoplastischen Kunststoffmaterials, zumindest für eine ausreichende Verarbeitungszeit, entgegenwirken können.

Bei einer praktischen Ausführungsform des erfindungsgemäßen Verfahrens wird der Verformungsschlitz gebildet durch einen Bereich zwischen zwei gegenüberliegenden Wellen, welche zum Verändern der Ausbildung des Verformungsschlitzes verbiegbar sind. Durch Vorsehen der gegenüberliegenden verbiegbaren Wellen bzw. durch Vorsehen von gegenüberliegenden verbiegbaren länglichen Körpern oder Walzen kann auf einfache und praktische Weise ein an die vorgegebene dreidimensionale Verformung angepasster Verformungsschlitz bereitgestellt werden, der durch den Bereich zwischen den gegenüberliegenden Wellen bzw. länglichen Körpern bzw. Walzen gebildet wird.

Besonders bevorzugt ist wenigstens eine Welle der beiden Wellen unter Beibehaltung der Ausbildung des Verformungsschlitzes rotierbar bzw. wenigstens eine Welle der beiden Wellen ist derart rotierbar, dass die Ausbildung des Verformungsschlitzes im wesentlichen beibehalten wird, und das Endlosmaterial wird zwischen den beiden Wellen hindurchgefördert und wenigstens eine der beiden Wellen wird zum hindurchfördern des Endlosmaterials in Rotation versetzt.

Die wenigstens eine Welle oder der wenigstens eine längliche Körper oder die wenigstens einen Walze umfasst vorzugsweise eine sogenannte biegsame Welle, die z.B. nach Art einer biegsamen Bohrwelle ausgebildet sein kann. Biegsame Wellen bestehen meist aus schraubenförmig in mehreren Lagen und mehrgängig gewickelten Drähten, insbesondere Stahldrähten (auch mit rechteckigem Querschnitt), welche von einem beweglichen Schutzschlauch z.B. aus Metall oder einer geeigneten Elastomerschicht (z.B. ein Silikon umfassend) umhüllt bzw. ummantelt sind. Oft ist auch noch eine Verstärkung durch ein schraubenförmig gewundenes Element, z.B. aus Metall, vorgesehen. Andere bekannte Ausführungsformen von biegsamen Wellen umfassen z.B. rund um eine starre Welle gefedert gelagerte Ringe. Sofern es sich bei dem thermoplastischen Kunststoffmaterial des Endlosmaterials um ein Polyolefin handelt, kann die Elastomerschicht bevorzugt in Form einer Silikon-Elastomerschicht ausgebildet sein.

Die Elastomerschicht kann vorteilhaft mit einer Antihaftschicht beschichtet sein kann. Als Material für die Antihaftschicht eignen sich z.B. verschiedene fluorierte Elastomere oder ausreichend elastische Fluor-Polymerschichten.

Infolge der obigen Ausbildung kann eine Rotation einer biegsamen Welle unter Beibehaltung der Ausbildung des Verformungsschlitzes vorgenommen werden bzw. die Rotation kann derart vorgenommen werden, dass die Ausbildung des Verformungsschlitzes im wesentlichen beibehalten wird, da die äußere Form der Welle, betrachtet von einen festen Laborsystem, bei Rotation derselben unverändert bzw. im wesentlichen unverändert bleibt. Durch rotieren der biegsamen Welle oder biegsamen Wellen kann das Endlosmaterial zwischen diesen hindurchgefördert werden.

Bevorzugt werden die beiden Wellen zum Hindurchfördern des Endlosmaterials gegenläufig in Rotation versetzt bzw. rotiert, einhergehend mit einer sehr wirksamen und auch genauen Förderung.

Bei einer weiteren praktischen Ausführungsform des erfindungsgemäßen Verfahrens wird in Schritt C die Ausbildung des Verformungsschlitzes zum Verändern der vorgegebenen Verformung durch verbiegen wenigstens einer der biegbaren Wellen verändert. Auf diese Weise kann während des laufenden Verformungsprozesses eine Veränderung der dreidimensionalen Verformung an dem bahnförmigen Endlosmaterial vorgenommen werden. Dies kann insbesondere dann von Vorteil sein, wenn bei einem Produktionsprozess von Formteilen auf anders gestaltete Formteile umgestellt werden soll oder wenn eine Umstellung auf ein anders gestaltetes Materialstück eines Formteils erfolgen soll.

Besonders praktisch kann die wenigstens eine Welle bevorzugt von wenigstens einem linear beweglichen Schubelement wenigstens eines Linearantriebs verbogen werden.

Bei einer bevorzugten Ausführungsform des erfindungsgemäßen Verfahrens werden in Schritt (A) ein erster und wenigstens ein weiterer Verformungsschlitz, vorzugsweise zwei weitere Verformungsschlitze bereitgestellt, wobei in Schritt (C) das Endlosmaterial zum Aufprägen der vorgegebenen Verformungen in der Laufrichtung zuerst durch den ersten Verformungsschlitz hindurch bewegt wird und anschließend durch den wenigstens einen weiteren Verformungsschlitz hindurch bewegt wird, wobei der wenigstens eine weitere Verformungsschlitz vorzugsweise zum Aufprägen einer Verformung vorgesehen bzw. eingerichtet ist, die sich von der durch den ersten Verformungsschlitz aufgeprägten Verformung unterscheidet. Durch Vorsehen des wenigstens einen weiteren Verformungsschlitzes können auch komplexe Verformungen - insbesondere mit stetig ansteigenden Umformgraden in der Laufrichtung - an dem bahnförmigen Endlosmaterial realisiert werden, welche durch weiteres Verformen des Endlosmaterials mittels des oder der weiteren Verformungsschlitze nach dem hindurch bewegen durch den ersten Verformungsschlitz geschaffen werden können. Insbesondere sehr komplexe Strukturen bzw. Verformungen lassen sich durch Vorsehen von zwei oder mehr weiteren Verformungsschlitzen realisieren, durch welche das Endlosmaterial in Laufrichtung in aufeinander folgender Weise hindurchgeführt wird.

Bevorzugt kann der wenigstens eine weitere Verformungsschlitz während des hindurch bewegens des Endlosmaterials relativ zu dem ersten Verformungsschlitz in einer Verformungsrichtung bewegt werden, die winkelig, insbesondere rechtwinkelig, zu der Laufrichtung orientiert ist. Auf diese Weise kann auch eine Verformung des Endlosmaterials in einer Richtung winklig zur Laufrichtung geschaffen werden, die insbesondere kontinuierlich entlang der Längserstreckung des Endlosmaterials veränderbar ist, wobei die Bewegung des weiteren Verformungsschlitzes in der Verformungsrichtung winkelig, insbesondere rechtwinkelig, zur Laufrichtung vorzugsweise an die Bewegungsgeschwindigkeit des Endlosmaterial in der vorgegebenen Laufrichtung angepasst sein kann.

Die erfindungsgemäße Vorrichtung zur Durchführung eines erfindungsgemäßen Verfahrens umfasst wenigstens eine Erwärmungsvorrichtung zum Erwärmen des Endlosmaterials, wenigstens einen durchgängigen Verformungsschlitz und wenigstens eine Bewegungseinrichtung zum Bewegen des Endlosmaterials in der Laufrichtung. Bevorzugt sind der Verformungsschlitz und die Bewegungseinrichtung in einer Baugruppe zusammengefasst. Die Vorrichtung ermöglicht vorteilhaft die Durchführung des erfindungsgemäßen Verfahrens, mit welchem vorteilhaft ein mit Verstärkungsfasern, insbesondere Lang- oder Endlosfasern, verstärktes Endlosmaterial bereitgestellt werden kann, welches bereits eine an das jeweilige Formteil angepasste bzw. für dieses vorgesehene Vorformung bzw. Verformung aufweist, wie bereits oben in Verbindung mit weiteren Vorteilen näher dargelegt.

Bevorzugt wird der Verformungsschlitz gebildet durch einen Bereich zwischen zwei gegenüberliegenden Wellen bzw. gegenüberliegenden länglichen Körpern oder Walzen, welche zum Verändern der Ausbildung des Verformungsschlitzes verbiegbar sind. Zum Hindurchfördern des Endlosmaterials zwischen den beiden Wellen ist wenigstens eine Welle der beiden Wellen unter Beibehaltung der Ausbildung des Verformungsschlitzes rotierbar bzw. wenigstens eine Welle der beiden Wellen ist derart rotierbar, dass die Ausbildung des Verformungsschlitzes im wesentlichen beibehalten wird, wobei die Bewegungseinrichtung die wenigstens eine rotierbare Welle und wenigstens eine Antriebseinrichtung zum rotieren der Welle umfasst. Wie bereits oben dargelegt, umfasst die wenigstens eine Welle, die unter Beibehaltung der Ausbildung des Verformungsschlitzes rotierbar ist, vorzugsweise eine sogenannte biegsame Welle bzw. ist in Form einer sogenannten biegsamen Welle ausgebildet, die wiederum z.B. nach Art einer biegsamen Bohrwelle ausgebildet sein kann.

Bei einer praktischen Ausführungsform ist wenigstens ein Linearantrieb mit wenigstens einem linear beweglichen Schubelement zum Verbiegen wenigstens einer der beiden Wellen vorgesehen. Durch Aktivieren des Linearantriebs kann auf einfache und praktische Weise eine vorgesehene Verbiegung der Wellen mittels des Schubelements des Linearantriebs vorgenommen werden.

Bei einer weiteren bevorzugten Ausführungsform sind ein erster und wenigstens ein weiterer Verformungsschlitz vorgesehen, wobei der wenigstens eine weitere Verformungsschlitz vorzugsweise zum Aufprägen einer Verformung vorgesehen ist, die sich von der durch den ersten Verformungsschlitz aufgeprägten Verformung unterscheidet, und wobei der wenigstens eine weitere Verformungsschlitz vorzugsweise in einer Verformungsrichtung bewegbar ist, die winklig, insbesondere rechtwinkelig, zu der Laufrichtung orientiert ist.

Durch Vorsehen des wenigstens einen weiteren Verformungsschlitzes können auch komplexe Verformungen an dem bahnförmigen Endlosmaterial realisiert werden, welche durch weiteres Verformen des Endlosmaterials mittels des oder der weiteren Verformungsschlitze nach dem hindurch bewegen durch den ersten Verformungsschlitz geschaffen werden können. Der wenigstens eine weitere Verformungsschlitz ist vorzugsweise in einer Verformungsrichtung bewegbar, die winkelig, insbesondere rechtwinkelig, zu der Laufrichtung orientiert ist. Auf diese Weise kann auch eine Verformung des Endlosmaterials in der Richtung winklig zur Laufrichtung geschaffen werden.

### Kurzbeschreibung der Zeichnung

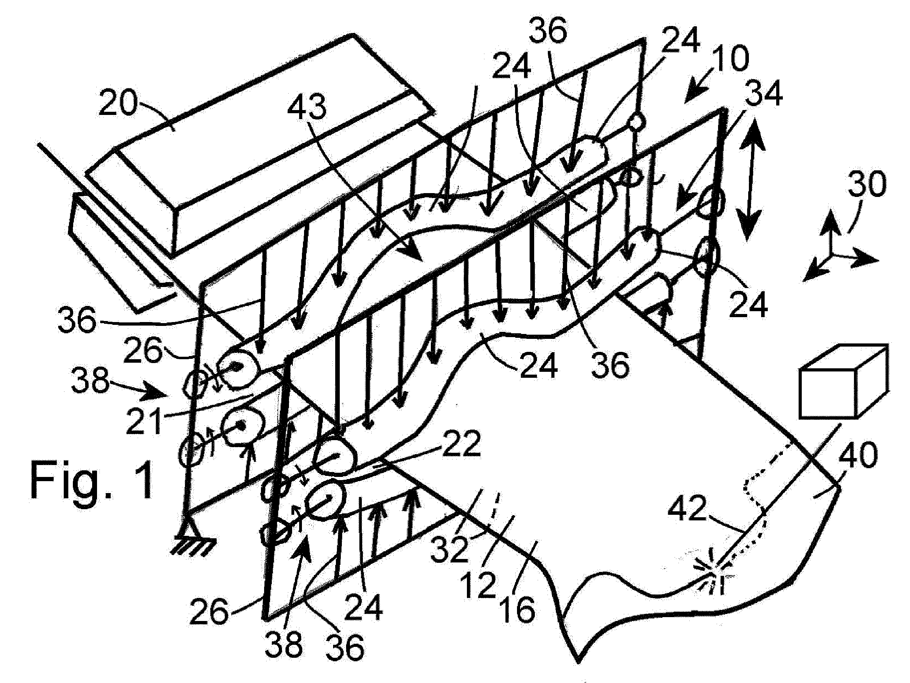

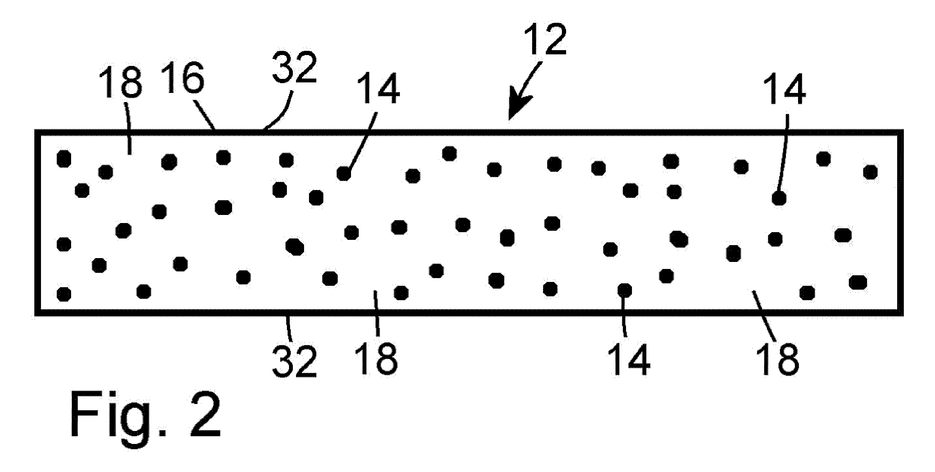

Nachfolgend wird ein Ausführungsbeispiel der Erfindung anhand der beigefügten Zeichnungen näher erläutert, in welchen die Fig. 1 eine sehr schematische Darstellung einer Vorrichtung 10 zur Durchführung eines Ausführungsbeispiels des erfindungsgemäßen Verfahrens zusammen mit einem bahnförmigen Endlosmaterial 12 zeigt. Die Fig. 2 zeigt eine sehr schematische Querschnittsdarstellung des bahnförmigen Endlosmaterials 12 mit einer Schnittebene rechtwinkelig zur Längserstreckung des Endlosmaterials 12

Das Endlosmaterial 12 (vgl. Fig. 2) besteht aus einer mit Verstärkungsfasern, insbesondere Lang- oder Endlosfasern, 14 verstärkten Lage 16, die ein die Verstärkungsfasern 12 zumindest teilweise oder zur Gänze umgebendes thermoplastisches Kunststoffmaterial 18 umfasst. Die Faserrichtung der Verstärkungsfasern 14 bzw. die Längserstreckung der Verstärkungsfasern 14 ist parallel bzw. im wesentlichen parallel zur Längsrichtung bzw. Längserstreckung des bahnförmigen Endlosmaterials 12 orientiert.

Die in Fig. 1 gezeigte sehr schematische Darstellung der Vorrichtung 10 zur Durchführung eines Ausführungsbeispiels des erfindungsgemäßen Verfahrens umfasst unter anderem eine Erwärmungsvorrichtung 20 zum Erwärmen des Endlosmaterials 12, einen ersten durchgängigen Verformungsschlitz 21 und einen weiteren durchgängigen Verformungsschlitz 22. Sowohl der erste als auch der weitere Verformungsschlitz 21, 22 wird jeweils gebildet durch einen Bereich zwischen zwei gegenüberliegenden Wellen 24, welche zum Verändern der Ausbildung des Verformungsschlitzes 21, 22 verbiegbar sind und an einem Verformungsrahmen 26 angebracht sind, wobei die beiden Enden jeder Welle 24 an dem Verformungsrahmen 26 fest eingespannt sind. Beide Wellen 24 sind zum Hindurchfördern des Endlosmaterials 12 zwischen den beiden Wellen 24 unter Beibehaltung bzw. unter wesentlicher Beibehaltung der Ausbildung des Verformungsschlitzes 21 bzw. 22, - und insbesondere unter Beibehaltung der Position des Verformungsschlitzes 21, 22 relativ zu dem Endlosmaterial12 - rotierbar (vgl. auch entsprechende Drehpfeile). Hierfür sind die Wellen 24 jeweils in Form einer biegsamen Welle 24 ausgebildet, deren äußere Form, betrachtet von einen festen Laborsystem 30, bei Rotation derselben unverändert bzw. im wesentlichen unverändert bleibt. Durch rotieren der biegsamen Wellen 24 kann das Endlosmaterial 12 zwischen diesen hindurchgefördert werden.

Die Erwärmungsvorrichtung 20 zum Erwärmen des Endlosmaterials 12 ist in Form eines Durchlauf-Umluft-Ofens 20 ausgebildet. Alternativ könnte die Erwärmungsvorrichtung 20 auch in Form einer Infrarotstrahlungsquelle mit einer Vielzahl von Infrarotstrahlen ausgebildet sein. Eine weitere Alternative zum Erwärmen des Endlosmaterials 12 besteht in der Möglichkeit die Verstärkungsfasern (insbesondere Lang- oder Endlosfasern) 14 induktiv zu erwärmen, insofern diese hierfür geeignet sind. Beispielhaft lassen sich Kohlenstofffasern oder Metallfasern induktiv erwärmen. Bei einer entsprechenden Erwärmungsvorrichtung 20 kann es sich um eine Induktionseinheit handeln. Weitere Alternativen können Erwärmungsvorrichtungen 20 basierend auf Hochfrequenz-, Mikrowellen- oder Kontakterwärmung sein. Auch eine Beflammungsvorrichtung oder eine Plasmastrahlvorrichtung ist als Erwärmungsvorrichtungen 20 eingesetzt werden. Denkbar ist auch die Kombination der vorgenannten Möglichkeiten innerhalb einer Erwärmungsvorrichtung 20.

Die Erwärmung durch die Erwärmungsvorrichtung 20 ist vorzugsweise so einzustellen, dass das Endlosmaterial 12 über seine ganze Dicke so durchwärmt wird, dass die thermoplastische Matrix 18 bzw. das thermoplastische Kunststoffmaterial 18 im mittleren Bereich der Dicke des Endlosmaterials 12 eine für die jeweilige Matrix 18 bzw. das jeweilige thermoplastische Kunststoffmaterial 18 möglichst hohe Temperatur innerhalb des nutzbaren Schmelzebereichs erreicht. Die Temperatur ist dabei vorzugsweise so niedrig zu wählen, dass das thermoplastische Kunststoffmaterial 18 auf der Außenseite 32 möglichst keinen Schaden nimmt.

Sofern eine Erwärmungsvorrichtung 20 in Form einer Infrarotstrahlungsquelle mit einer Vielzahl von Infrarotstrahlen verwendet wird, kann durch unterschiedliche Bestrahlungsleistungen entlang der durchlaufenden Strecke in dem Erwärmungsfeld auch eine gewisse Zeit während des Durchlaufs des Endlosmaterials 12 mit derart wenig Leistung bestrahlt werden, dass die jeweils äußere Schicht bzw. Außenseite 32 nur bedingt abkühlt, die Wärme aber durch Wärmeleitung zum Kern des Endlosmaterials 12 vordringen kann.

Bevor das Endlosmaterial 12 den ersten Verformungsschlitz 21 durchläuft, kann es je nach verwendetem thermoplastischen Kunststoffmaterial 18 des Endlosmaterials 12 gewünscht sein, dass die Oberfläche bzw. Außenseite 32 des Endlosmaterials 12 gerade so weit abkühlt, dass sie ihre klebrigen Eigenschaften soweit verliert, dass es kein Ankleben an den flexiblen bzw. biegbaren Wellen 24 bzw. Umformwalzen 24 gibt. Dies kann durch verschiedene Maßnahmen erfolgen. So könnte z.B. eine geeignet lange Strecke derart gewählt werden, dass die Wärme der Oberfläche bzw. Außenseite 32 des Endlosmaterials 12 über Strahlung an die Umgebung abgegeben wird, wobei jedoch eine forcierte Wärmeabgabe empfohlen wird, damit nicht zu viel Wärme aus dem Kernbereich des Endlosmaterials 12 nachfließen kann, welcher im Idealfall eine Temperatur etwas oberhalb der Grenze zwischen Schmelze und Erstarrungstemperatur des thermoplastischen Kunststoffmaterials 18 hat.

Nach dem Durchlauf durch den ersten durchgängigen Verformungsschlitz 21 ist das Endlosmaterial 12 von einem flachen Zustand in ein dreidimensionales Endlosprofil überführt worden; sorgt man für eine entsprechend hohe Abkühlung durch die zuvor beschriebene Vorabkühlung vor dem ersten Verformungsschlitz 21, die Abkühlung durch den Kontakt mit den verbiegbaren Wellen 24 bzw. Walzen 24 und ggf. eine weitere Nachkühlung, so lassen sich mit dem erfindungsgemäßen Verfahren beliebig komplex geformte Endlosprofile 12 bzw. Endlosmaterialien 12 herstellen.

Die Vorrichtung umfasst ferner vier Bewegungseinrichtungen 34 zum Bewegen des Endlosmaterials 12 in der Laufrichtung, wobei jede Bewegungseinrichtung 34 eine der rotierbaren Wellen 24 und eine Antriebseinrichtung (nicht näher dargestellt) zum rotieren der Welle 24 umfasst. Jeweils zwei gegenüberliegende Wellen 24 - wobei der Bereich zwischen diesen den ersten bzw. weiteren Verformungsschlitz 21, 22 bildet - sind zum hindurchfördern des Endlosmaterials 12 von der jeweiligen Antriebseinrichtung gegenläufig in Rotation versetzbar bzw. gegenläufig rotierbar.

Für jede Welle 24 sind eine Mehrzahl von Linearantrieben (nicht näher dargestellt) mit jeweils einem linear beweglichen Schubelement 36 (nur sehr schematisch dargestellt) zum verbiegen der Welle 24 über die Breite des Endlosmaterials 12 vorgesehen. Durch Verändern der Stellung der Schubelemente 36 mittels des jeweiligen Linearantriebs während des Durchlaufs lassen sich Verformungsänderungen bzw. Profilveränderungen während des Bewegens des Endlosmaterials 12 in der vorgegebenen Laufrichtung erzeugen. Somit wäre es beispielsweise möglich, eine Übergangsstruktur von einer Rinne 43 (wie in Fig. 1 gezeigt) in zwei kleinere Rinnen herzustellen. Die Schubelemente 36 weisen einen frei definierbaren Hub auf und können z.B. kleine, servogetriebene Gewindespindeln oder pneumatische Lösungen usw. umfassen, die einen jeweiligen Gegenspieler auf der gegenüberliegenden Seite haben, so dass die Summe der Hübe jeweils zweier gegenüberliegender Einheiten konstant bzw. im wesentlichen konstant sein kann. Je schmäler die Einheiten bzw. Schubelemente 36 sind, um so besser lassen sich erwünschte Krümmungen realisieren. Die Wellen 24 können an den Spitzen bzw. Enden der Schubelemente 36 mit einfachen halb-schalenförmigen Gleitelementen versehen sein. Vorteilhaft sind auch Halteelemente, welche eingerichtet sind, die Wellen 24 auch in der Laufrichtung des Endlosmaterials 12 in ihrer Position zu halten.

Der weitere Verformungsschlitz 22 ist zum aufprägen einer Verformung vorgesehen, die sich von der durch den ersten Verformungsschlitz 21 aufgeprägten Verformung unterscheidet. Ferner ist der weitere Verformungsschlitz 22 bzw. der Verformungsrahmen 26 in einer Verformungsrichtung (vgl. Doppelpfeil) bewegbar, die winkelig, vorzugsweise rechtwinkelig, zu der Laufrichtung (vgl. entsprechenden Pfeil) orientiert ist. Statt dieser Höhenverstellung bzw. Vertikalverstellung des gesamten Verformungsrahmens 26 können auch - ggf. etwas längere - Hubwege der Schubelemente 36 diese Funktionalität übernehmen.

Mit der in Fig. 1 dargestellten Vorrichtung 10 kann nachfolgend beschriebenes Ausführungsbeispiel eines erfindungsgemäßen Verfahrens zum Verformen des bahnförmigen Endlosmaterials 12 durchgeführt werden, wobei das Endlosmaterial 12 aus einer mit Verstärkungsfasern (insbesondere Lang- oder Endlosfasern) 14 verstärkten Lage 16 besteht (vgl. auch Fig. 2, die eine schematische Querschnittsdarstellung des Endlosmaterials 12 zeigt, mit einer Schnittebene rechtwinkelig zur Längserstreckung des Endlosmaterials 12), die ein die Verstärkungsfasern (insbesondere Lang- oder Endlosfasern) 14 zumindest teilweise oder zur Gänze umgebendes thermoplastisches Kunststoffmaterial 18 umfasst.

Das Verfahren umfasst die folgenden Schritte:
(A) Bereitstellen eines ersten und eines weiteren durchgängigen Verformungsschlitzes 21, 22 zum Ausbilden vorgegebener dreidimensionaler Verformungen an dem bahnförmigen Endlosmaterial 12, wobei jeder Verformungsschlitz 21, 22 der jeweils vorgegebenen Verformung entsprechend ausgebildet ist bzw. wobei jeder Verformungsschlitz 21, 22 der für ihn vorgegebenen Verformung entsprechend ausgebildet ist,
(B) wenigstens bereichsweises Erwärmen des Endlosmaterials 12 bis an oder über die Schmelztemperatur des thermoplastischen Kunststoffmaterials 18, und
(C) Bewegen des erwärmten Endlosmaterials 12 in einer vorgegebenen Laufrichtung, wobei das Endlosmaterial 12 zum Aufprägen der vorgegebenen dreidimensionalen Verformungen in der Laufrichtung zuerst durch den ersten Verformungsschlitz 21 hindurch bewegt wird und anschließend durch den weiteren Verformungsschlitz 22 hindurch bewegt wird, wobei der weitere Verformungsschlitz 22 zum aufprägen einer Verformung vorgesehen bzw. eingerichtet ist, die sich von der durch den ersten Verformungsschlitz 21 aufgeprägten dreidimensionalen Verformung bzw. von der für den ersten Verformungsschlitz 21 vorgegebenen dreidimensionalen Verformung unterscheidet.

Das Endlosmaterial 12 wird zwischen den beiden Paaren 38 gegenüberliegender Wellen 24 hindurchgefördert und die Wellen 24 jedes Paars 38 werden zum hindurchfördern des Endlosmaterials 12 von der jeweiligen Antriebseinrichtung gegenläufig in Rotation versetzt bzw. rotiert. Es ist vorteilhaft, alle Wellen 24 bzw. Walzen 24 von der jeweiligen Antriebseinrichtung aktiv anzutreiben, damit eine Verformung des Endlosmaterials 12 im gewünschten Maß sicher gewährleistet werden kann. Für eine angepasste Temperierung kann es ggf. auch sinnvoll sein, die Wellen 24 bzw. Walzen 24 von innen zu temperieren oder zu kühlen.

Die Ausbildung des ersten und des weiteren Verformungsschlitzes 21, 22 kann zum Verändern der jeweils vorgegebenen Verformung durch verbiegen wenigstens einer der biegbaren Wellen 24 jeweils eines Paars 38 gegenüberliegender Wellen 24 verändert werden, wobei hierfür die Welle 24 von jeweils wenigstens einem oder mehreren der linear beweglichen Schubelemente 36 der vorgesehenen Linearantriebe durch entsprechende Aktivierung des oder der Linearantriebe verbogen wird.

Der eine weitere Verformungsschlitz 22 bzw. der entsprechende Verformungsrahmen 26 kann vorteilhaft während des hindurch bewegens des Endlosmaterials 12 relativ zu dem ersten Verformungsschlitz 21 in einer Verformungsrichtung bewegt werden, die winkelig, vorzugsweise rechtwinkelig, zu der Laufrichtung orientiert ist, um auch eine Verformung des Endlosmaterials 12 in der Richtung winkelig zur Laufrichtung zu schaffen bzw. auszubilden.

Nach dem Verformen des Endlosmaterials 12 durch hindurch bewegen durch den ersten und den weiteren bzw. zweiten Verformungsschlitz 21, 22 - wobei sich durch das Verformen durch den ersten Verformungsschlitz eine dreidimensionale Verformung nach Art einer Rinne 43 ausbildet - werden Materialstücke 40 von dem verformten Endlosmaterial 12 mittels eines Laserstahls 42 durch Laserschneiden abgetrennt bzw. abgeschnitten (alternativ können auch Schneidmesser oder vergleichbare Schneidelemente eingesetzt werden). Von dem Endlosmaterial 12 abgetrennte bzw. abgeschnittene Materialstücke 40 können zur Herstellung von einem oder mehreren Formteilen verwendet werden, wobei die Materialstücke 40 hierzu geeignet verformt, zum Ausbilden eines Vorformlings aneinander gelegt und der Vorformling innerhalb eines Formwerkzeugs zur endgültigen Ausbildung des Formteils erwärmt bzw. erhitzt und unter Druck gesetzt wird. Da das Endlosmaterial 12 bereits eine an das jeweilige Formteil angepasste bzw. für dieses vorgesehene Vorformung bzw. Verformung infolge der Verformung durch den ersten und den weiteren Verformungsschlitz 21, 22 aufweist, kann der Verformungsaufwand und auch der Handhabungsaufwand insbesondere zum Ausbilden des Vorformlings deutlich reduziert werden. Auf diese Weise kann bei einer Serienfertigung einer Vielzahl baugleicher Formteile insbesondere die Prozesszeit deutlich verkürzt werden. Die Abtrennung bzw. das Abschneiden mittels eines Laserstrahls 42 hat den Vorteil, dass dieser quasi keine mechanischen Kräfte auf das verformte Endlosmaterial 12 ausübt, welches eine nur sehr geringe mechanische Eigenstabilität aufweist.

Da die Vorrichtung 10 zur Durchführung des Verfahrens Materialstücke 40 bzw. Bauteile 40 mit deutlich unterschiedlichen Ausbildungen erzeugen kann, sind im Unterschied zur der Verwendung des Laserstrahls 42 Auflageformen ungeeignet. Der Laserstrahl 42 kann, wie in Fig. 1 schematisch veranschaulicht, ein von einem Laserscannersystem erzeugter Laserstrahl 42 sein, welches ggf. über Bildverarbeitungssysteme die Lage der aus der Vorrichtung 10 herauslaufenden Abschnitte des Endlosmaterials 12 erfasst und den entsprechenden Laser dynamisch steuert, um die Bauteile 40 bzw. Materialstücke 40 abzuschneiden bzw. abzutrennen.

Alternativ könnte auch ein Knickarmroboter vorgesehen sein, der einen Schneidkopf führt, welcher z.B. Schneidelementen oder beispielsweise Schneiden in der Art eines Nibblers durch Ausstanzen von kleinsten Materialstückchen eine Schnittlinie durch das Endlosmaterial 12 erzeugen kann. Die Nachführung des Armes könnte hierbei durch die Kombination bzw. Zusammenarbeit eines Bildverarbeitungssystems mit den Größen Arbeitsgeschwindigkeit, Ausgaberichtung der Bauteile, Bauteilgröße etc. erfolgen.

Da die Endkonturen nacheinander folgender Bauteile 40 bzw. Materialstücke 40 nicht immer so gestaltet sind, dass sie nahtlos aneinander passen, sind die oben beschriebenen Zuschnittsysteme so auszulegen, dass sie während des Durchlaufs des Endlosmaterials 12 mindestens zwei Schnitte an jeder Grenze zwischen zwei Bauteilen bzw. Materialstücken 40 durchführen können, wobei die Schnittlänge jedes Schnittes dabei der maximal auftretenden Schnittlänge entsprechen sollte. In erster Näherung kann eine real vorkommende maximale Schnittlänge bei welliger Schnittgestaltung im entsprechenden Winkel zur Verstärkungsfaser (insbesondere Lang- oder Endlosfasern) 14 bis zum dreifachen oder vierfachen der Breite des Endlosmaterials 12 lang sein.

Die Vorrichtung 10 ist vorzugsweise über Temperaturen, Verarbeitungsgeschwindigkeiten, Heizen bzw. Erwärmen und Kühlen so abzustimmen, dass zum einen zwischen dem zu verformenden Endlosmaterial 12 und den verbiegbaren Wellen 24 bzw. Walzen 24 jeweils gerade so viel Haftung vorhanden ist, dass es zu einem Weitertransport und einer Umformung des Endlosmaterials 12 kommt. Andererseits muss die Haftung so gering sein, dass das Endlosmaterial 12 für die Verformung noch über das Material der Wellen 24 bzw. Walzen 24 gleiten kann, beziehungsweise an den Wellen 24 oder Walzen 24 kein thermoplastisches Kunststoffmaterial 18 anhaftet.

Ferner ist die Abkühlung beim hindurch bewegen durch den ersten und den weiteren bzw. zweiten Verformungsschlitz 21, 22 so abzustimmen, dass das Endlosmaterial 12 nach dem Durchgang durch den weiteren bzw. zweiten Verformungsschlitz 22 soweit abgekühlt ist, dass es sich durch ggf. eingefrorene Spannungen, Eigengewichte und nachfolgend einwirkende Handlingskräfte nicht weiter plastisch verformt. Das Prozessfenster dieses erfindungsgemäßen Verfahrens ist weit mehr als viele andere Prozesse stark abhängig von Geschwindigkeiten und Temperaturen, darüber hinaus ist eine hochdynamische Steuerung der Schubelemente 36 und ggf. der Höhenverstellung erforderlich. Das Verfahren erlaubt aber dafür die Herstellung beliebiger und komplett unterschiedlicher 3D-Geometrien, die für den Aufbau sehr komplexer Strukturen unter Verwendung der jeweils abgetrennten Materialstücke 40 genutzt werden können.

Eine typische Durchlaufgeschwindigkeit, mit welcher das Endlosmaterial 12 durch die Verformungsschlitze 21, 22 bewegt wird, liegt zwischen 5 cm/s und 25 cm/s.

### Bezugszeichenliste

- 10: Vorrichtung zur Durchführung des Verfahrens
- 12: Endlosmaterial
- 14: Verstärkungsfaser (insbesondere Lang- oder Endlosfaser)
- 16: Lage
- 18: thermoplastisches Kunststoffmaterial
- 20: Erwärmungsvorrichtung
- 21: erster Verformungsschlitz
- 22: weiterer Verformungsschlitz
- 24: Welle
- 26: Verformungsrahmen
- 30: Laborsystem
- 32: Außenseite
- 34: Bewegungseinrichtung
- 36: Schubelement
- 38: Paar
- 40: Materialstück
- 42: Laserstrahl
- 43: Rinne

## Patentansprüche

1. Verfahren zum Verformen eines bahnförmigen Endlosmaterials (12), wobei das Endlosmaterial (12) aus wenigstens einer mit Verstärkungsfasern (14) verstärkten Lage (16) besteht, die ein die Verstärkungsfasern (14) zumindest teilweise umgebendes thermoplastisches Kunststoffmaterial (18) umfasst, und wobei das Verfahren die folgenden Schritte umfasst:
(A) Bereitstellen wenigstens eines durchgängigen Verformungsschlitzes (21, 22) zum Ausbilden wenigstens einer vorgegebenen dreidimensionalen Verformung (43) an dem bahnförmigen Endlosmaterial (12), wobei der Verformungsschlitz (12, 22) der vorgegebenen Verformung (43) entsprechend ausgebildet ist,
(B) wenigstens bereichsweises Erwärmen des Endlosmaterials (12) bis an oder über die Schmelztemperatur des thermoplastischen Kunststoffmaterials (18), und
(C) Bewegen des erwärmten Endlosmaterials (12) in einer vorgegebenen Laufrichtung, wobei das Endlosmaterial (12) beim Bewegen in der Laufrichtung durch den durchgängigen Verformungsschlitz (21, 22) hindurch bewegt wird, und wobei bei dem hindurch bewegen durch den Verformungsschlitz (21, 22) dem Endlosmaterial (12) die vorgegebene dreidimensionale Verformung (43) aufgeprägt wird.

2. Verfahren nach Anspruch 1, **dadurch gekennzeichnet, dass** der Verformungsschlitz (21, 22) gebildet wird durch einen Bereich zwischen zwei gegenüberliegenden Wellen (24), welche zum Verändern der Ausbildung des Verformungsschlitzes (21, 22) verbiegbar sind.

3. Verfahren nach Anspruch 2, **dadurch gekennzeichnet, dass** wenigstens eine Welle (24) der beiden Wellen (24) unter Beibehaltung der Ausbildung des Verformungsschlitzes (21, 22) rotierbar ist, und dass das Endlosmaterial (12) zwischen den beiden Wellen (24) hindurchgefördert wird und wenigstens eine der beiden Wellen (24) zum hindurchfördern des Endlosmaterials (12) in Rotation versetzt wird.

4. Verfahren nach Anspruch 3, **dadurch gekennzeichnet, dass** die beiden Wellen (24) zum hindurchfördern des Endlosmaterials (12) gegenläufig in Rotation versetzt werden.

5. Verfahren nach einem der Ansprüche 2 bis 4, **dadurch gekennzeichnet, dass** in Schritt (C) die Ausbildung des Verformungsschlitzes (21, 22) zum Verändern der vorgegebenen Verformung (43) durch verbiegen wenigstens einer der biegbaren Wellen (24) verändert wird.

6. Verfahren nach Anspruch 5, **dadurch gekennzeichnet, dass** die wenigstens eine Welle (24) von wenigstens einem linear beweglichen Schubelement (36) wenigstens eines Linearantriebs verbogen wird.

7. Verfahren nach einem der vorangehenden Ansprüche, **dadurch gekennzeichnet, dass** in Schritt (A) ein erster (21) und wenigstens ein weiterer Verformungsschlitz (22), vorzugsweise zwei weitere Verformungsschlitze (22) bereitgestellt werden, wobei in Schritt (C) das Endlosmaterial (12) zum Aufprägen der vorgegebenen Verformungen in der Laufrichtung zuerst durch den ersten Verformungsschlitz (21) hindurch bewegt wird und anschließend durch den wenigstens einen weiteren Verformungsschlitz (22) hindurch bewegt wird.

8. Verfahren nach Anspruch 7, **dadurch gekennzeichnet, dass** der wenigstens eine weitere Verformungsschlitz (22) zum aufprägen einer Verformung vorgesehen ist, die sich von der durch den ersten Verformungsschlitz (21) aufgeprägten Verformung (43) unterscheidet.

9. Verfahren nach Anspruch 7 oder 8, **dadurch gekennzeichnet, dass** der wenigstens eine weitere Verformungsschlitz (22) während des hindurch bewegens des Endlosmaterials (12) relativ zu dem ersten Verformungsschlitz (21) in einer Verformungsrichtung bewegt wird, die winkelig, insbesondere rechtwinkelig, zu der Laufrichtung orientiert ist.

10. Vorrichtung (10) zur Durchführung eines Verfahrens nach einem der Ansprüche 1 bis 9, mit wenigstens einer Erwärmungsvorrichtung (20) zum Erwärmen des Endlosmaterials (12), wenigstens einem durchgängigen Verformungsschlitz (21, 22) und wenigstens einer Bewegungseinrichtung (34) zum bewegen des Endlosmaterials (12) in der Laufrichtung.

11. Vorrichtung (10) nach Anspruch 10, **dadurch gekennzeichnet, dass** der Verformungsschlitz (21, 22) gebildet wird durch einen Bereich zwischen zwei gegenüberliegenden Wellen (24), welche zum Verändern der Ausbildung des Verformungsschlitzes (21, 22) verbiegbar sind.

12. Vorrichtung (10) nach Anspruch 11, **dadurch gekennzeichnet, dass** zum Hindurchfördern des Endlosmaterials (12) zwischen den beiden Wellen (24) wenigstens eine Welle (24) der beiden Wellen (24) unter Beibehaltung der Ausbildung des Verformungsschlitzes (21, 22) rotierbar ist.

13. Vorrichtung (10) nach Anspruch 12, **dadurch gekennzeichnet, dass** die Bewegungseinrichtung (34) die wenigstens eine rotierbare Welle (24) und wenigstens eine Antriebseinrichtung zum Rotieren der Welle (24) umfasst.

14. Vorrichtung (10) nach einem der Ansprüche 11 bis 13, **dadurch gekennzeichnet, dass** wenigstens ein Linearantrieb mit wenigstens einem linear beweglichen Schubelement (36) zum Verbiegen wenigstens einer der beiden Wellen (24) vorgesehen ist.

15. Vorrichtung (10) nach einem der Ansprüche 1 bis 14, **dadurch gekennzeichnet, dass** ein erster (21) und wenigstens ein weiterer Verformungsschlitz (22) vorgesehen sind, wobei der wenigstens eine weitere Verformungsschlitz (22) vorzugsweise zum Aufprägen einer Verformung vorgesehen ist, die sich von der durch den ersten Verformungsschlitz (21) aufgeprägten Verformung (43) unterscheidet, und wobei der wenigstens eine weitere Verformungsschlitz (22) vorzugsweise in einer Verformungsrichtung bewegbar ist, die winkelig, insbesondere rechtwinkelig, zu der Laufrichtung orientiert ist.
